# EUROPEAN PATENT APPLICATION

(11) **EP 3 054 411 A1**
(43) Date of publication of application: **10.08.2016**
(21) Application number: 14850214.9
(22) Date of filing: 24.07.2014
(51) Int. Cl.: G06Q 50/08, G08G 1/13

(54) **WORK MACHINE POSITION INFORMATION MANAGEMENT SYSTEM**

(30) Priority: 04.10.2013 JP 2013209595
(71) Applicant: Tadano, Ltd., Kagawa 761-0185 (JP)
(72) Inventor: AOKI, Toshihisa, Takamatsu-shi Kagawa 761-0185 (JP)
(74) Representative: MFG Patentanwälte Meyer-Wildhagen Meggle-Freund Gerhard PartG mbB
(86) International application number: PCT/JP2014/069537
(87) International publication number: WO 2015/049911

(57) **Abstract**

A machine-position-information management system is disclosed, which is capable of reducing the transmission and data management costs in management of the work positions of machines. In the machine-position-information management system for a crane, a transmission controller determines whether the crane has started work, based on a result of the detection by a work-state detector, and when determining that the crane has started work, the transmission controller outputs the position information acquired from a GPS sensor at this time to a data management unit from a remote communication system. The data management unit is configured to save the position information when the crane starts the work and to output the saved position information upon request for use.

## Description

### Technical Field

The present invention relates to a position information management system which manages the position information of a machine such as a crane.

### Background Art

Heretofore, a position information management system for machines as illustrated in Patent Literature (hereinafter, referred to as "PTL") 1, for example, has been proposed for the purpose of knowing the positions of machines such as cranes dispersedly disposed at various locations.

In the position information management system in PTL 1, a mobile communication device (transmission controller) transmits, at regular time intervals or regular distances, the position information of a machine, which is acquired from a positioning system such as a GPS, to a management unit (data management unit) at a remote location using a remote communication system.

The data management unit is configured to save the position information of a machine and output the saved position information upon request for use.

### Citation List

### Patent Literature

PTL 1: Japanese Patent No. 4921123

### Summary of the Invention

### Problems to be Solved by the Invention

In the position information management system in PTL 1, however, application of the method of transmitting the position information at regular time intervals in management of work positions (fixed positions) results in transmitting the same position information many times during work. Meanwhile, application of the method of transmitting the position information at regular distances results in transmitting unnecessary position information many times during moving.

Accordingly, performing unnecessary transmission many times involves unnecessary transmission costs. In addition, the data management unit saves a large amount of unnecessary data in association with the transmission, so that this operation of the data management unit involves unnecessary data management costs.

The present invention has been made in consideration of the problems mentioned above and thus aims to provide a position information management system for a machine (hereinafter, referred to as "machine-position-information management system") capable of reducing the transmission and data management costs in management of the work positions of machines.

### Solutions to Problems

As a result of careful study, the present inventor et al. have employed the following machine-position-information management system in order to solve the problems mentioned above.

A machine-position-information management system according to the present invention includes a transmission controller configured to transmit position information of a machine to a data management unit at a remote location using a remote communication system, the position information being acquired from a positioning system, and the data management unit being configured to save the position information and to output the saved position information upon request for use, the machine-position-information management system further comprising a work-state detector configured to detect whether the machine is in a work state, in which: the transmission controller determines whether the machine has started work, based on a result of the detection by the work-state detector, and when determining that the machine has started work, the transmission controller outputs the position information acquired from the positioning system at this time to the remote communication system.

In the machine-position-information management system according to the present invention, the transmission controller may determine whether the machine has ended work, based on a result of the detection by the work-state detector, and when determining that the machine has ended work, the transmission controller may output the position information acquired from the positioning system at this time to the remote communication system.

### Effects of the Invention

In a machine-position-information management system according to the present invention, position information when work is started is transmitted to a data management unit as the position information of the machine. For this reason, unlike the related art, the same position information does not have to be transmitted many times and unnecessary position information does not have to be transmitted during moving in management of work positions. Furthermore, the data management unit is no longer required to save a large amount of data with this configuration. Accordingly, the machine-position-information management system according to the present invention can avoid an increase in transmission and data management costs in management of the work positions of machines.

### Brief Description of Drawings

Fig. 1 is right side view of a crane according to an embodiment of the present invention.
Fig. 2 is a block diagram illustrating a configuration of a position information management system according to the embodiment.

### Description of Embodiments

Hereinafter, an embodiment of the present invention will be described with reference to the drawings.

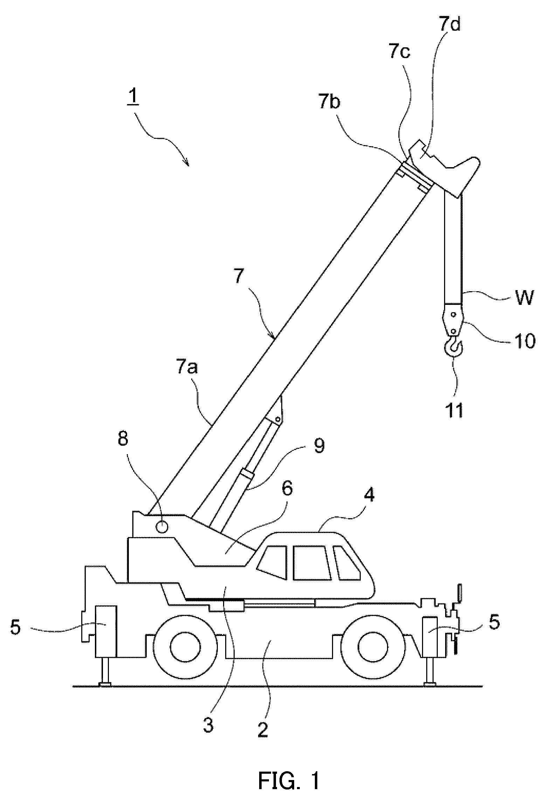

Fig. 1 is a right side view of a crane 1 according to an embodiment of the present invention. The overall configuration of the crane 1 will be described first. This crane 1 includes: a carrier 2 serving as a body portion (body) of a vehicle having a traveling feature; a turning base 3 attached to an upper part of the carrier 2 in a horizontally turnable manner; and an operating room 4 provided at the turning base 3.

Left and right pairs of outriggers 5 are provided at the front and rear sides of the carrier 2, respectively (only outriggers on the right side are illustrated). A boom bracket 6 is fixed at an upper side of the turning base 3. A boom 7 is attached to this boom bracket 6.

The boom 7 includes a base end portion attached to the boom bracket 6 via a boom-root supporting pin 8 and is thus capable of being raised and lowered around this boom-root supporting pin 8. A derrick cylinder 9 is placed between the boom bracket 6 and the boom 7. Extension and retraction of this derrick cylinder 9 raises or lowers the boom 7.

The boom 7 includes a base end boom 7a, an intermediate boom 7b, and a leading end boom 7c which are combined together telescopically in the base end boom 7a in this order with the boom 7a, intermediate boom 7b, and leading end boom 7c being at the outermost, intermediate, and innermost positions, respectively. The booms 7a to 7c are internally coupled together by telescopic cylinders (not illustrated), and slide for extension or retraction when these telescopic cylinders slide for extension or retraction.

A leading end 7d of the leading end boom 7c is provided with a sheave (not illustrated). A wire rope W extending from a winch (not illustrated) provided at the boom bracket 6 is wound around the sheave. A hook block 10 is suspended from the wire rope W. A hook 11 is attached to a lower side of the hook block 10. This hook 11 hooks a suspended load (not illustrated) using a crane wire rope (not illustrated).

An operation unit (not illustrated) is provided inside the operating room 4. This operation unit is provided for an operator to perform operation to turn the turn table 3, to raise or lower and/or extend or retract the boom 7, to wind or unwind the winch, to extend or retract each of the outriggers 5, and to start or stop the engine, for example.

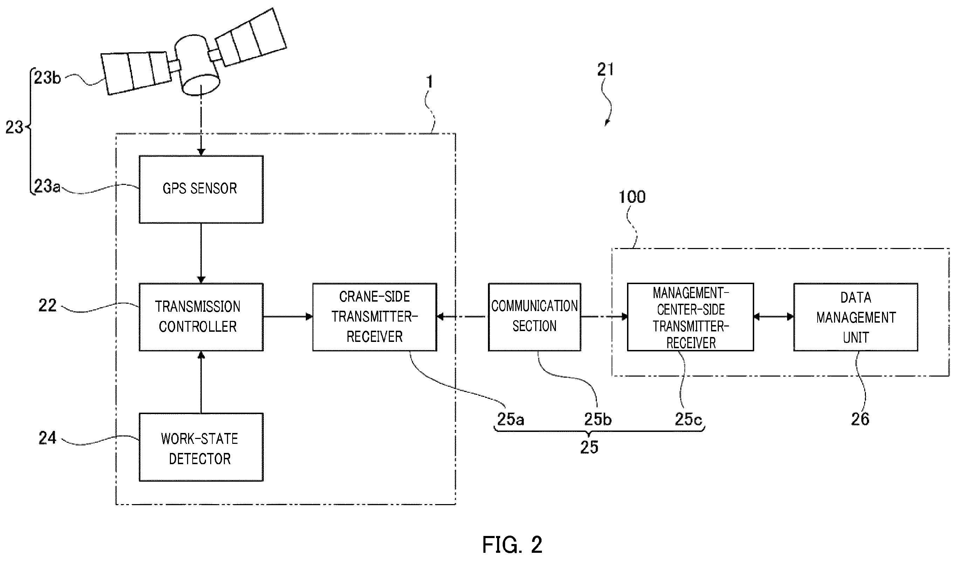

Fig. 2 is a block diagram illustrating a configuration of a position information management system 21 according to the present invention, which is used for the crane 1. This position information management system 21 is a system which transmits, using a remote communication system 25, position information of cranes 1 dispersedly disposed at various locations to a management center 100 at a location distant from the cranes 1 (remote location), and manages the position information of the cranes 1 at the management center 100.

This position information management system 21 is configured in such a way that a transmission controller 22 serves as a primary component. This transmission controller 22 is provided within the operation room 4 of the crane 1 (see Fig. 1), for example.

A GPS sensor 23a and a work-state detector 24 are connected to an input side of the transmission controller 22. A crane-side transmitter-receiver 25a of the remote communication system 25 is connected to an output side of the transmission controller 22. The GPS sensor 23a, work-state detector 24, and crane-side transmitter-receiver 25a are mounted on the crane 1.

The GPS sensor 23a is communicably connected to a GPS satellite 23b. In this embodiment, a positioning system 23 according to the present invention is composed of the GPS sensor 23a and GPS satellite 23b. The GPS satellite 23b transmits the position information of the GPS satellite 23b and time information to the GPS sensor 23a. The GPS sensor 23a computes the position of the crane 1 based on the position information transmitted from the GPS satellite 23b.

The work-state detector 24 detects whether the crane 1 is in a work state. Specific examples of the method of detecting whether a crane is in the work state include the following methods (1) to (7).

(1) Detecting whether all the outriggers 5 are on the ground.
(2) Detecting whether the operation to place an outrigger 5 on the ground has been selected with the operation unit.
(3) Detecting whether the boom 7 has left from a predetermined retracted position.
(4) Detecting whether a parking brake has been activated.
(5) Detecting whether an actuator (such as a cylinder or motor) has been activated.
(6) Detecting whether a PTO has been turned ON.
(7) Detecting whether the power supply of a work controller has been turned ON.

The transmission controller 22 determines whether the crane 1 has started work, based on the result of detection by the work-state detector 24. More specifically, the transmission controller 22 determines whether the crane 1 has started work, based on whether the crane 1 has shifted to a work state from a non-work state based on the result of detection by the work-state detector 24.

When determining that the crane 1 has started work, based on the result of detection by the work-state detector 24, the transmission controller 22 outputs the position information (position information when the work is started) of the crane 1 and time information acquired from the GPS sensor 23a at that time to the remote communication system 25 together with the ID number of the crane 1. The ID number is used to distinguish the crane 1 from another crane 1.

The remote communication system 25 is a system which performs communication using radio. This remote communication system 25 includes: a crane-side transmitter-receiver 25a connected to the transmission controller 22; and a management-center-side transmitter-receiver 25c communicably connected to the crane-side transmitter-receiver 25a via a communication unit 25b. The management-center-side transmitter-receiver 25c is disposed at the management center 100.

The crane-side transmitter-receiver 25a transmits, to the management-center-side transmitter-receiver 25c, the position information of the crane 1 when the crane 1 starts work, the time information and the ID number of the crane 1 outputted from the transmission controller 22.

Note that, a known system such as a satellite communication system or a terrestrial mobile communication system (portable phone, PHS, or wireless LAN), for example, can be cited as the communication unit 25b.

In the management center 100, a data management unit 26 is connected to the management-center-side transmitter-receiver 25c. This data management unit 26 includes a database system and saves the position information of the crane 1 when the crane 1 starts work, the time information and the ID number of the crane 1 outputted from the management center-side transmitter-receiver 25c in this database system. In addition, the data management unit 26 is configured to be capable of outputting these pieces of information saved in the database system, upon request for use.

As described above, the position information management system 21 according to the present embodiment employs the configuration in which the position information when the crane 1 starts work is transmitted to the data management unit 26 as the position information of the crane 1. Thus, unlike the related art, the same position information does not have to be transmitted many times, and unnecessary position information during moving does not have to be transmitted. Furthermore, because of this configuration, the data management unit 26 is no longer required to save a large amount of unnecessary data. Accordingly, the position information management system 21 according to the present embodiment can avoid an increase in transmission and data management costs in management of the work positions of the cranes 1.

Moreover, the management center-side transmitter-receiver 25c is capable of transmitting the information saved in the data management unit 26 (such as position information of another crane 1) to the crane-side transmitter-receiver 25a in addition to or instead of receiving the information transmitted from the crane-side transmitter-receiver 25a and outputting the received information to the data management unit 26. In this case, the crane-side transmitter-receiver 25a may receive the information transmitted from the management-center-side transmitter-receiver 25c and display the information on a monitor (not illustrated), for example.

Furthermore, the position information management system 21 may configure at least one of the management-center-side transmitter-receiver 25c and the crane-side transmitter-receiver 25a to be connectable to the Internet in order for the position information management system 21 to acquire various information from the Internet.

The embodiment according to the present invention has been described thus far, but this embodiment is not intended to limit the contents of the present invention. In addition, various modifications are possible within a range not departing from the claims of the present invention.

For example, the position information when work is started is used as the position information of the crane 1 in the position information management system 21 according to the present embodiment, but position information when the crane 1 ends work (starts moving) may be used. The management procedure in this case will be described, hereinafter.

The transmission controller 22 determines whether the crane 1 has ended work, based on the result of detection by the work-state detector 24. More specifically, the transmission controller 22 determines whether the crane 1 has ended work, based on whether the crane 1 has shifted to the non-work state from the work state, based on the result of detection by the work-state detector 24.

Moreover, the traveling speed of the crane 1 may be detected to determine whether the crane 1 has ended the work (has started moving), based on a change in traveling speed or a change in traveling distance may be detected using the positioning system 23 to determine whether the crane 1 has ended the work. Moreover, whether the work state of the crane 1 lasts for a predetermined period or an accumulated total period of the work state reaches the predetermined period may be determined to determine whether the crane 1 has ended work.

When determining that the crane 1 has ended work, based on the result of detection by the work-state detector 24, the transmission controller 22 transmits the position information of the crane 1 (position information when the crane 1 has ended the work) and the time information acquired from the GPS sensor 23a at that time to the data management unit 26 from the remote communication system 25 together with the ID number. The data management unit 26 saves these pieces of information transmitted from the remote communication system 25 and outputs these saved pieces of information upon request for use.

Saving the position information when the crane 1 has ended work as the position information of the crane 1 in the manner described above enhances the accuracy of position information and allows the user to surely know the work position of the crane 1.

Moreover, in the data management section 26, the received time of the position information when the work is started and the received time of the position information when the work is ended may be measured to compute the difference between the received times (actual work time) to determine whether the actual work time exceeds a previously stored expected work time. Moreover, when the actual work time has exceeded the expected work time, the data management unit 26 may notify a person at the management center 100 accordingly by displaying a notification message on a monitor, for example.

Furthermore, in the data management section 26, the received time of the position information when the work is ended (when traveling is started) and the received time of the position information when work is started next may be measured to compute the difference between the received times (actual moving time) to determine whether the actual moving time exceeds a previously stored expected moving time. Moreover, when the actual moving time has exceeded the expected moving time, the data management unit 26 may notify a person at the management center 100 accordingly by displaying a notification message on a monitor, for example.

Accordingly, the person at the management center 100 can immediately know that an unexpected situation such as a trouble during work or moving has occurred at the crane 1 and promptly take an appropriate measure for the situation. Note that, the position information management system may use, as the position information of the crane 1, the position information when the work is ended instead of the position information when the work is started.

Moreover, in the position information management system 21 according to the present embodiment, ID numbers are managed in addition to the position information of the cranes 1 and the time information, but ID numbers are not necessarily managed as long as the cranes 1 are distinguishable from one another based on information from the remote communication line.

Furthermore, in the position information management system 21 according to the present embodiment, a satellite positioning system (so called GPS) is used as the positioning system 23, but another positioning system may be used. Examples of the other positioning system include a positioning system using an electric wave of a mobile communication system such as a portable phone or a laser-tracking positioning system can be cited.

Furthermore, in the position information management system 21 according to the present embodiment, application to the crane 1 has been described, but application to another machine (such as a machine used at a high position) may be possible.

### Cross-Reference for Related Applications

This application claims and is entitled to the benefit of Japanese Patent Application No. 2013-209595, filed on October 4, 2013, the disclosure of which including the specification, drawings, and abstract is incorporated herein by reference in its entirety.

### Reference Signs List

- 1: Crane (machine vehicle)
- 21: Position information management system
- 22: Transmission control section
- 23: Positioning system
- 24: Work-state detector
- 25: Remote communication system
- 26: Data management unit

## Claims

1. A machine-position-information management system comprising a transmission controller configured to transmit position information of a machine to a data management unit at a remote location using a remote communication system, the position information being acquired from a positioning system, and the data management unit being configured to save the position information and to output the saved position information upon request for use,
the machine-position-information management system further comprising a work-state detector configured to detect whether the machine is in a work state, wherein:
the transmission controller determines whether the machine has started work, based on a result of the detection by the work-state detector, and
when determining that the machine has started work, the transmission controller outputs the position information acquired from the positioning system at this time to the remote communication system.

2. The machine-position-information management system according to claim 1, wherein:
the transmission controller determines whether the machine has ended work, based on a result of the detection by the work-state detector, and
when determining that the machine has ended work, the transmission controller outputs the position information acquired from the positioning system at this time to the remote communication system.
